# EUROPÄISCHE PATENTSCHRIFT

(11) **EP 3 790 704 B1**
(45) Veröffentlichungstag und Bekanntmachung des Hinweises auf die Patenterteilung: **27.03.2024**
(21) Anmeldenummer: 19722886.9
(22) Anmeldetag: 07.05.2019
(51) Int. Cl.: B23Q 11/08, F16J 3/04

(54) **LÄNGENVARIABLE SCHUTZABDECKUNG**
VARIABLE LENGTH PROTECTIVE COVER
COUVERTURE DE PROTECTION DE LONGUEUR VARIABLE

(30) Priorität: 08.05.2018 DE 102018111042
(43) Veröffentlichungstag der Anmeldung: 17.03.2021
(73) Patentinhaber: HEMA Maschinen- und Apparateschutz GmbH, 63500 Seligenstadt (DE)
(72) Erfinder: MAY, Matthias, 63863 Eschau (DE)
(74) Vertreter: Boult Wade Tennant LLP
(86) Internationale Anmeldenummer: PCT/EP2019/061737
(87) Internationale Veröffentlichungsnummer: WO 2019/215191

(56) Entgegenhaltungen:
- EP-A1- 1 842 620
- EP-A1- 3 184 236
- DE-U1-202015 001 696
- DE-U1-202017 004 433

## Beschreibung

Die Erfindung betrifft gemäß dem Oberbegriff von Anspruch 1 eine längenvariable Schutzabdeckung, die wenigstens ein Faltenelement mit einer Vielzahl an Falten aufweist, wobei das Faltenelement in regelmäßigen Abständen als Zwischenfalten ausgebildete Falten aufweist, die aus zwei flächig aufeinander liegenden Faltenlagen einer Falte mit einer Knickstelle bestehen und an denen Lamellenelemente festgelegt sind, die im Querschnitt L-förmig ausgebildet sind, wobei jeweils ein Schenkel an der Zwischenfalte festgelegt ist, während die Schenkel sich teleskopartig überlappen.

Eine derartige Schutzabdeckung ist aus einer speziellen Ausführungsform der DE 10 2016 103 985 A1 bekannt. Dort sind die Lamellen zwischen den taschenartig verbundenen Faltenlagen der verkürzt ausgeführten Zwischenfalten des Faltenelements angebracht, d.h. die Lamellen überlappen auch auf der Seite der Schutzabdeckung, auf welcher die regulären Falten des Faltenelements angeordnet sind, während die Zwischenfalten frei nach außen ragen. Diese Ausführungsform ermöglicht es bereits, die Lamellen sicher unmittelbar an dem Faltenelement festzulegen. Die Anordnung in den Taschen bedingt aber dann eine aufwändigere Fertigung der Schutzabdeckung. Zum einen können die Zwischenfalten meist erst dann fertig ausgebildet werden, wenn auch die Lamellen in die dabei entstehenden Taschen eingebracht und festgelegt werden. Zum anderen ist es aufwändig, die Zwischenfalten verkürzt auszubilden, da das Faltenelement nicht in der üblichen Standardfaltung eingesetzt werden kann. Ungünstig kann je nach Anwendung auch sein, dass die Zwischenfalten nach außen überstehen, was optisch als nachteilig wahrgenommen wird und auch die Reinigung erschweren kann. Ein Einsatzgebiet derartiger Schutzabdeckungen sind Werkzeugmaschinen, bei denen sich die Zugangsöffnungen zu Arbeitsräumen im Betrieb dynamisch ändern. Die Schutzabdeckungen verhindern, dass umherfliegende Späne und austretendes Schneidfluid die Umgebung gefährden.

Aus der JP2008-12639A ist eine längenvariable Schutzabdeckung bekannt, bei der die Befestigung an starren Zwischenelementen erfolgt, an denen Abschnitte von Falten des Faltenelements ebenso wie die Schenkel von Lamellen angebracht sind.

Die DE 20 2009 006 306 U1 zeigt eine Schutzabdeckung mit einem Faltenbalge mit starren Zwischenelementen, an denen beidseitig auskragende Lamellen angebracht sind, die die Durchbiegung des Behanges vermindern helfen.

Die DE 16 66 445 U zeigt einen zwei Faltenbalgelemente ohne schützende Lamellen, die stirnseitig miteinander verbunden sind.

Die EP 1 842 620 A1 zeigt einen Faltenbalg, bei welchem Abschnitte der Falten mit Zwischenwandelementen verbunden sind.

Die DE 20 2017 004 433 U1 zeigt eine Schutzvorrichtung mit einer Vielzahl von Lamellen und einem Abschirmbauglied aus elastischem Stoff, das in Verbindungsendabschnitten an den Lamellen befestigt ist.

Die Aufgabe der Erfindung besteht darin, eine Schutzabdeckung zu schaffen, die mit einer bestimmten Anzahl an Lamellen einen maximalen Hub abdecken kann.

Hauptmerkmale der Erfindung sind im kennzeichnenden Teil von Anspruch 1 angegeben. Ausgestaltungen sind Gegenstand der Ansprüche 2 bis 9.

Die Aufgabe wird erfindungsgemäß dadurch gelöst, dass zwischen den Zwischenfalten (16) reguläre Falten (14) ausgebildet sind und die Zwischenfalten (16) die gleiche Kantenlänge wie die übrigen regulären Falten des Faltenelements besitzen. Dies hat den Vorteil, dass Standardfaltungen des Faltenelements eingesetzt werden können, bei denen im Ausgangszustand alle Falten gleich ausgebildet sind. Die Zwischenfalten werden dann hergestellt, indem bestimmte Faltenlagen, vorzugsweise die benachbarten Faltenlagen jeder zweiten Falte des gefalteten Ausgangsmaterials, flach miteinander verbunden werden.

Es hat sich gezeigt, dass sich durch diese Anordnung die Ausziehlänge des Faltenelements und damit der gesamten Schutzabdeckung maximieren lässt, da die regulären Falten des Behanges praktisch bis zu ihrer gestreckten Lage aufgefaltet werden können, ohne dass dies die Betriebssicherheit einschränkt. Insgesamt ergibt sich auch ohne zusätzliche Rahmen- oder Stützelemente eine hohe Stabilität durch die auf einer Seite der Schutzabdeckung überlappenden Lamellen und die auf der anderen Seite liegenden regulären Falten, wobei die Lamellen und die regulären Falten des Faltenelements durch die wie verstärkende Querrippen wirkenden Zwischenfalten verbunden sind. Vorteilhaft ist auch, dass die regulären Falten an den den Anbringungsstellen der Lamellen gegenüberliegenden Enden der Zwischenfalten liegen, so dass durch die federnd überlappenden Lamellen entstehende Momente besser innerhalb der Schutzabdeckung aufgenommen werden können.

Das Verbinden kann vorzugsweise in der Weise erfolgen, dass die Faltenlagen der Zwischenfalten miteinander vernäht, verklebt, verschweißt oder vernietet sind.

Für den Fall, dass die Schutzabdeckung keine ausreichende Eigensteifigkeit aufweisen sollte oder das Vorsehen von Gleitelementen zum Zusammenwirken mit Führungsbahnen, die an den Rändern der Öffnung zu einem Arbeitsraum eine Werkzeugmaschine vorgesehen sein können, ist in einer weiteren Ausgestaltung der Erfindung vorgesehen, dass an den Zwischenfalten Rahmenelemente angebracht sind.

Die Anbindung der Lamellenelemente oder auch der ggf. vorhandenen Rahmen- oder Stützelemente an das Faltenelement kann in der Weise gelöst werden, dass die Lamellenelemente und/oder die Rahmenelemente mit dem Faltenelement im Bereich der Knickstellen an den Zwischenfalten verklebt, vernietet, verclipst, vernietet oder verschweißt sind.

In einer bevorzugten Ausführungsform ist vorgesehen, dass das Material des wenigstens einen Faltenelements ein- oder mehrlagig aus Gewebe und/oder Kunststoffe und/oder Mischformen aus Geweben und Kunststoffen ausgebildet ist.

Die genaue Auswahl richtet sich hierbei nach den Anforderungen des Anwendungsfalls, z.B. der dynamischen Beanspruchung oder dem Einsatz in einer aggressiven Umgebung.

In einer besonders bevorzugten Ausführungsform der Erfindung ist das Faltenelement als Faltenbalg ausgebildet, der sich über die gesamte Fläche der Schutzabdeckung erstreckt.

Diese Lösung hat den Vorteil, dass die einem Arbeitsraum zugewandten Lamellenelemente nach außen hin vollständig von dem Faltenbalg abgedeckt wird. Dies schützt die Umgebung zusätzlich gegen austretende Stoffe, wobei es zur weiteren Verbesserung dieser Eigenschaft besonders bevorzugt ist, dass das Faltenelement frei von Durchbrüchen oder Löchern ist.

In einer noch weiteren bevorzugten Ausführungsform der Erfindung wird das Schutzelement ohne die ansonsten üblichen Auszugssicherungen konzipiert, die die Lamellenelemente vor einem übermäßigen Auseinanderziehen schützen, wobei die regulären Falten des Faltenelements in der maximal ausgefahrenen Position der Schutzabdeckung als Auszugsbegrenzung wirken. Hierdurch wird die Teilezahl vermindert und das Gewicht der Schutzabdeckung reduziert, was bei hohen dynamischen Beanspruchungen von Vorteil ist. Die regulären Falten falten sich selbst nach einem maximalen gestreckten Ausziehen infolge der Elastizitätseigenschaften des Materials beim Verkürzen der Länge der Schutzabdeckung wieder zusammen. Durch die Ausnutzung der maximalen Streckbarkeit der regulären Falten kann die Schutzabdeckung insgesamt mit einer Minimalzahl an Falten und Zwischenfalten ausgebildet werden, so dass sich neben dem Gewicht auch die Herstellungskosten minimieren lassen.

Als besonders zweckmäßig hat sich eine Ausführungsform der Erfindung erwiesen, bei welcher jede zweite Falte des Faltenelements als Zwischenfalte ausgebildet ist. Es sind aber auch Ausführungsformen möglich, bei denen nur jede dritte oder vierte Falte als Zwischenfalte ausgebildet ist.

Weitere Merkmale, Einzelheiten und Vorteile der Erfindung ergeben sich aus dem Wortlaut der Ansprüche sowie aus der folgenden Beschreibung von Ausführungsbeispielen anhand der Zeichnungen. Es zeigen:
- Fig. 1: eine Ansicht einer längenvariablen Schutzabdeckung;
- Fig. 2: einen Längsschnitt (verkürzt) der Schutzabdeckung nach Fig. 1;
- Fig. 3: eine vergrößerte Einzelheit A aus Fig. 2;
- Fig. 4: eine vergrößerte Einzelheit B aus Fig. 2;
- Fig. 5: eine vergrößerte Einzelheit C aus Fig. 2;
- Fig. 6: eine ausgeschnittene Draufsicht auf eine Schutzabdeckung mit zwei entfernten Lamellenelemente.

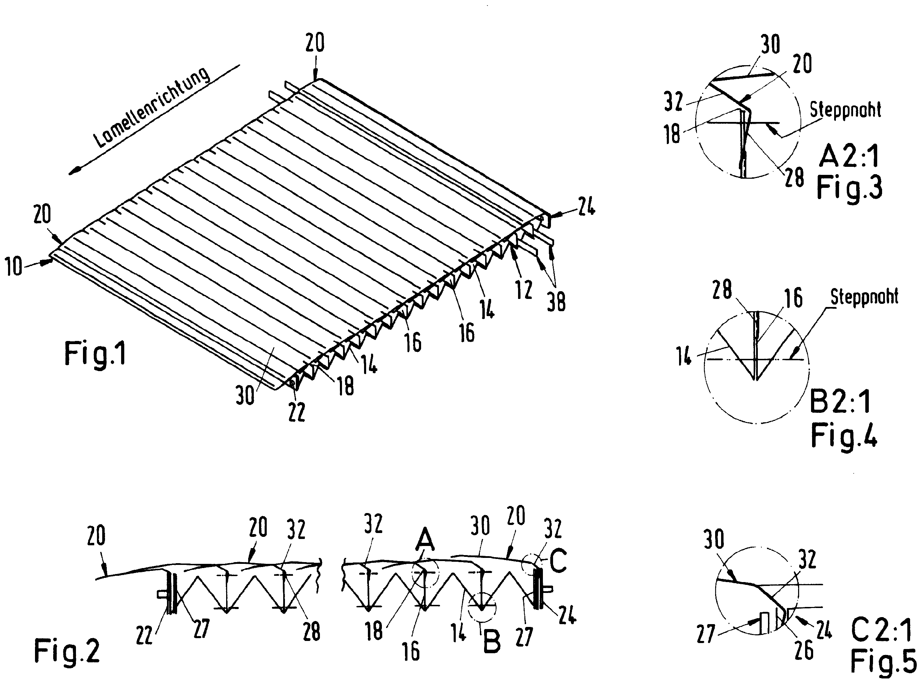

In Fig. 1 ist eine längenvariable Schutzabdeckung 10 gezeigt, wie sie zur Abdeckung von Arbeitsräumen von Werkzeugmaschinen (nicht gezeigt) eingesetzt wird. Die Schutzabdeckung 10 lässt sich in ihrer Länge zwischen einer maximal gestauchten und einer maximal auseinandergezogenen Stellung verstellen. Dadurch ist es möglich, sie zwischen im Betrieb der Werkzeugmaschine relativ zueinander bewegten Teilen anzuordnen. Diese Bewegungen können hochdynamisch sein.

Die Schutzabdeckung 10 besitzt ein sich über ihre gesamte jeweilige Länge erstreckendes Faltenelement 12, das bei dem Ausführungsbeispiel aus einem PP-Material besteht. Wie insbesondere auch aus Fig. 2 gut zu erkennen ist, werden bei dem ursprünglich gleichmäßig gefalteten Faltenelement 12 die Faltenlagen jeder zweiten Faltung flach zur Bildung von Zwischenfalten 16 aufeinander befestigt, was durch Versteppen (Vernähen), Verkleben, Vernieten oder Verschweißen erfolgen kann. Dabei entstehen Knickstellen 18, an denen die beiden Faltenlagen der Zwischenfalten 16 um 180° zueinander abgewinkelt sind. Das Faltenelement 12 kann über seine gesamte Länge auch im Bereich der Zwischenfalten ohne Durchbrüche ausgebildet sein, d.h. es bietet einen hermetischen Verschluss zwischen zwei Endleisten 22, 24, an denen die beiden Endfaltenlagen 26 des Faltenelements 12 mit Hilfe von Nietleisten 27 festgelegt sind. Zwischen den Zwischenfalten 16 sind reguläre Falten 14 ausgebildet, die sich beim Auseinanderziehen des Schutzelements auffalten, wobei sie im maximal aufgefalteten, d.h. gestreckten Zustand als Auszugssicherung wirken und den maximalen Abstand der Zwischenfalten 16 zueinander begrenzen.

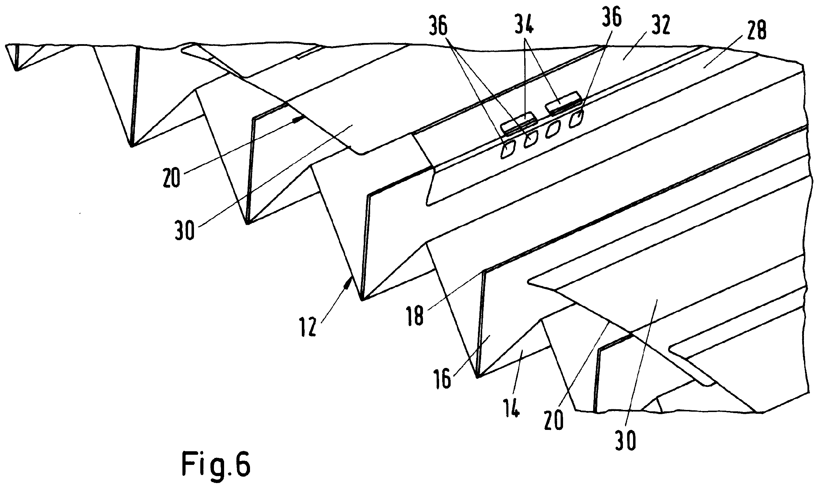

Zum Arbeitsraum der Werkzeugmaschine hin sind schuppen-/teleskopartig überlappende Lamellenelemente 20 aus Metall oder Kunststoff vorgesehen, die einen im Wesentlichen L-förmigen Querschnitt besitzen. Kurze Schenkel 28 dienen dabei der Befestigung der Lamellenelemente 20 an den freien Enden der Zwischenfalten 16 im Bereich der Knickstellen 18, während die in der Erstreckungsrichtung des Schutzelements 10 abgewinkelten Schenkel 30 eine Länge aufweisen, die größer ist als der Abstand zweier Zwischenfalten 16 im maximal ausgezogenen Zustand des Faltenelements 12. Dadurch ist sichergestellt, dass sich die Lamellenelemente 20 mit ihren Schenkeln 30 schuppenartig überlappen, so dass die Lamellenelemente 20 teleskopartig auseinandergezogen bzw. zusammengeschoben werden können. Damit können sich auch die Lamellenelemente 20 der Längenänderung des Schutzelements 10 flexibel anpassen. Die Lamellenelemente 20 besitzen zwischen den kurzen Schenkeln 28 und den langen Schenkeln 30 der Lamellenelement 20 ist jeweils ein Übergangsbereich 32 vorgesehen (siehe auch Fig. 6), der mit Ausnehmungen 34 versehen ist, durch welche Befestigungsclips (nicht gezeigt) auf die kurzen Schenkel 28 aufsteckbar sind. Diese Clips verkrallen sich von beiden Seiten mit dem Faltenelementmaterial, wobei hierzu in den kurzen Schenkeln 28 Öffnungen 36 für die Zähne der Befestigungsclips eingebracht sind.

Die Anbringung der Lamellenelemente 20 an den Zwischenfalten kann auch auf andere Weise gelöst werden, beispielsweise durch ein Versteppen der kurzen Schenkel 28 mit den Zwischenfalten 16. Auch ein Verkleben ist möglich, im Falle von Kunststofflamellen ist auch ein Verschweißen denkbar.

In Fig. 1 sind noch zwei Montageleisten 38 zu erkennen, die aber nur zur Montage der Lamellenelemente 20 an den Zwischenfalten 16 genutzt werden und vor dem Einbau der Schutzabdeckung in eine Werkzeugmaschine entfernt werden.

### Bezugszeichenliste

- 10: Schutzabdeckung
- 12: Faltenelement
- 14: Reguläre Falten
- 16: Zwischenfalten
- 18: Knickstellen
- 20: Lamellenelement
- 22: Endleiste
- 24: Endleiste
- 26: Endfaltenlage
- 27: Nietleisten
- 28: Kurze Schenkel
- 30: Überlappende Schenkel
- 32: Übergangsbereiche
- 34: Ausnehmungen
- 36: Öffnungen
- 38: Montageleisten

## Patentansprüche

1. Längenvariable Schutzabdeckung (10), die wenigstens ein Faltenelement (12) mit einer Vielzahl an Falten (14, 16) aufweist, wobei das Faltenelement (12) in regelmäßigen Abständen als Zwischenfalten (16) ausgebildete Falten aufweist, die aus zwei flächig aufeinander liegenden Faltenlagen einer Falte mit einer Knickstelle (18) bestehen und an denen Lamellenelemente (20) festgelegt sind, die im Querschnitt L-förmig ausgebildet sind, wobei jeweils ein Schenkel (28) an der Zwischenfalte (16) festgelegt ist, während die anderen Schenkel (30) sich teleskopartig überlappen, wobei die Lamellenelemente (20) im Bereich der Knickstellen (18) der Zwischenfalten (16) angebracht sind, **dadurch gekennzeichnet, dass** zwischen den Zwischenfalten (16) reguläre Falten (14) ausgebildet sind und die Zwischenfalten (16) die gleiche Kantenlänge wie die übrigen regulären Falten (14) des Faltenelements (12) besitzen.

2. Längenvariable Schutzabdeckung nach Anspruch 1, **dadurch gekennzeichnet, dass** die Faltenlagen der Zwischenfalten (16) miteinander vernäht, verklebt, verschweißt oder vernietet sind.

3. Längenvariable Schutzabdeckung nach einem der vorhergehenden Ansprüche, **dadurch gekennzeichnet, dass** an den Zwischenfalten (16) Rahmenelemente angebracht sind.

4. Längenvariable Schutzabdeckung nach einem der vorhergehenden Ansprüche, **dadurch gekennzeichnet, dass** die Lamellenelemente (20) und/oder die Rahmenelemente mit dem Faltenelement (12) im Bereich der Knickstellen (18) an den Zwischenfalten (16) verklebt, vernietet, verclipst, vernietet oder verschweißt sind.

5. Längenvariable Schutzabdeckung nach einem der vorhergehenden Ansprüche, **dadurch gekennzeichnet, dass** das Material des wenigstens einen Faltenelements (12) ein- oder mehrlagig aus Gewebe und/oder Kunststoffe und/oder Mischformen aus Geweben und Kunststoffen ausgebildet ist.

6. Längenvariable Schutzabdeckung nach einem der vorhergehenden Ansprüche, **dadurch gekennzeichnet, dass** das Faltenelement (12) als Faltenbalg ausgebildet ist, der sich über die gesamte Breite der Schutzabdeckung (10) erstreckt.

7. Längenvariable Schutzabdeckung nach Anspruch 6, **dadurch gekennzeichnet, dass** das Faltenelement (12) frei von Durchbrüchen oder Löchern ist.

8. Längenvariable Schutzabdeckung nach einem der vorgehergehenden Ansprüche, **dadurch gekennzeichnet, dass** die regulären Falten (14) des Faltenelements (12) in der maximal ausgefahrenen Position der Schutzabdeckung (10) als Auszugsbegrenzung wirken.

9. Längenvariable Schutzabdeckung nach einem der vorhergehenden Ansprüche, **dadurch gekennzeichnet, dass** jede zweite Falte des Faltenelements (12) als Zwischenfalte (16) ausgebildet ist.

## Claims

1. Variable-length protective cover (10) which has at least one fold element (12) having a plurality of folds (14, 16), wherein the fold element (12) has folds which are designed as intermediate folds (16) at regular spacing intervals and which consist of two fold layers of a fold, lying flat atop each other, having a kink point (18), and to which lamellar elements (20) are fixed which have L-shaped cross-sections, wherein one limb (28) is fixed to the intermediate fold (16), while the other limbs (30) telescopically overlap, wherein the lamellar elements (20) are attached in the region of the kink points (18) of the intermediate folds (16), **characterised in that** regular folds (14) are formed between the intermediate folds (16) and the intermediate folds (16) have the same edge length as the other regular folds (14) of the fold element (12).

2. Variable-length protective cover according to claim 1, **characterised in that** the fold layers of the intermediate folds (16) are sewn, glued, welded or riveted together.

3. Variable-length protective cover according to any one of the preceding claims, **characterised in that** frame elements are attached to the intermediate folds (16).

4. Variable-length protective cover according to any one of the preceding claims, **characterised in that** the lamellar elements (20) and/or the frame elements are glued, riveted, clipped, riveted or welded to the fold element (12) in the region of the kink points (18) at the intermediate folds (16).

5. Variable-length protective cover according to any one of the preceding claims, **characterised in that** the material of the at least one fold element (12) is formed in one or more layers from woven fabric and/or plastics and/or mixed forms consisting of woven fabrics and plastics.

6. Variable-length protective cover according to any one of the preceding claims, **characterised in that** the fold element (12) is designed as a bellows which extends over the entire width of the protective cover (10).

7. Variable-length protective cover according to claim 6, **characterised in that** the fold element (12) is free of perforations or holes.

8. Variable-length protective cover according to any one of the preceding claims, **characterised in that** the regular folds (14) of the fold element (12) act as an extension limit in the maximally extended position of the protective cover (10).

9. Variable-length protective cover according to any one of the preceding claims, **characterised in that** every second fold of the fold element (12) is formed as an intermediate fold (16).

## Revendications

1. Couverture de protection de longueur variable (10), qui présente au moins un élément de pli (12) avec une pluralité de plis (14, 16), dans laquelle l'élément de pli (12) présente à intervalles réguliers des plis conçus comme des intermédiaires (16), qui se composent de deux couches de plis superposées à plat d'un pli avec un point d'inflexion (18) et auxquelles des éléments de lamelle (20) sont fixés, qui en section transversale sont conçus en forme de L, dans laquelle respectivement une branche (28) est fixée au pli intermédiaire (16), tandis que les autres branches (30) se chevauchent de manière télescopique, dans laquelle les éléments de lamelle (20) sont montés dans la zone des points d'inflexion (18) des plis intermédiaires (16), **caractérisée en ce que** des plis réguliers (14) sont conçus entre les plis intermédiaires (16) et les plis intermédiaires (16) possèdent la même longueur d'arête que les autres plis réguliers (14) de l'élément de pli (12).

2. Couverture de protection de longueur variable selon la revendication 1, **caractérisée en ce que** les couches de plis des plis intermédiaires (16) sont cousues, collées, soudées ou rivetées les unes avec les autres.

3. Couverture de protection de longueur variable selon l'une quelconque des revendications précédentes, **caractérisée en ce que** des éléments de cadre sont montés sur les plis intermédiaires (16).

4. Couverture de protection de longueur variable selon l'une quelconque des revendications précédentes, **caractérisée en ce que** les éléments de lamelle (20) et/ou les éléments de cadre sont collés, rivetés, clipsés, rivetés ou soudés dans la zone des points d'inflexion (18) au niveau des plis intermédiaires (16).

5. Couverture de protection de longueur variable selon l'une quelconque des revendications précédentes, **caractérisée en ce que** le matériau du au moins un élément de pli (12) est conçu en une ou plusieurs couches de tissus et/ou de matières plastiques et/ou de formes mixtes à partir de tissus et de matières plastiques.

6. Couverture de protection de longueur variable selon l'une quelconque des revendications précédentes, **caractérisée en ce que** l'élément de pli (12) est conçu comme soufflet, qui s'étend sur toute la largeur de la couverture de protection (10).

7. Couverture de protection selon la revendication 6, **caractérisée en ce que** l'élément de pli (12) est dépourvu de percées ou de trous.

8. Couverture de protection de longueur variable selon l'une quelconque des revendications précédentes, **caractérisée en ce que** des plis réguliers (14) de l'élément de pli (12) agissent comme limitation d'extraction dans la position déployée maximale de la couverture de protection (10).

9. Couverture de protection de longueur variable selon l'une quelconque des revendications précédentes, **caractérisée en ce que** chaque second pli de l'élément de pli (12) est conçu comme un pli intermédiaire (16).
